# EUROPÄISCHE PATENTSCHRIFT

(11) **EP 3 043 022 B1**
(45) Veröffentlichungstag und Bekanntmachung des Hinweises auf die Patenterteilung: **18.10.2023**
(21) Anmeldenummer: 15196895.5
(22) Anmeldetag: 27.11.2015
(51) Int. Cl.: F01D 5/14

(54) **STRÖMUNGSMASCHINE MIT RINGRAUMERWEITERUNG UND SCHAUFEL**
TURBOMACHINE WITH RING ROOM EXTENSION AND BLADE
TURBOMACHINE À ÉLARGISSEMENT D'ESPACE ANNULAIRE ET AUBE

(30) Priorität: 12.12.2014 DE 102014225689
(43) Veröffentlichungstag der Anmeldung: 13.07.2016
(73) Patentinhaber: MTU Aero Engines AG, 80995 München (DE)
(72) Erfinder: Malzacher, Franz, 82194 Gröbenzell (DE); Brettschneider, Markus, 80995 München (DE)

(56) Entgegenhaltungen:
- EP-A2- 1 126 132
- EP-A2- 1 382 797
- DE-A1-102007 020 025
- DE-A1-102011 076 804

## Beschreibung

Die Erfindung betrifft eine Strömungsmaschine nach dem Oberbegriff des Patentanspruchs 1 und eine Schaufel für eine Strömungsmaschine.

In Strömungsmaschinen bzw. Turbomaschinen wie Flugtriebewerken und stationäre Gasturbinen wird ein wesentlicher Verlustanteil durch eine verzögerte Strömung im gasführenden Strömungskanal bzw. Ringraum verursacht. In Abhängigkeit von zulässigen Verzögerungswerten führt dies mit einem idealen Ringraum zu entsprechenden geometrischen Einschränkungen.

Zur Reduzierung von Strömungsverlusten im Ringraum ist in der EP 0 943 784 A1 eine axiale Strömungsmaschine mit mehrstufiger Beschaufelung gezeigt, deren von einer rotorseitigen Seitenwandung und von einer statorseitigen Seitenwandung gebildete Ringraumkontur rotorseitig in Axialrichtung periodisch wellenförmig ausgebildet ist und die gegenüberliegend zu einer rotorseitigen Erhebung eine statorseitige Vertiefung aufweist.

Aus der EP 0 799 973 A1 ist eine Strömungsmaschine mit einer Ringraumkontur bekannt, die unmittelbar am Austritt eines Laufschaufelgitters einen Knickwinkel aufweist, der so bemessen sein soll, dass eine Abströmung aus dem Laufschaufelgitter bezüglich Totaldruck und Abströmwinkel homogenisiert wird. Ein nachfolgendes Leitschaufelgitter ist eintrittsseitig mit einem korrespondierenden Gegenwinkel versehen.

Weitere Beispiele sind aus den Dokumenten D102011076804A1, EP 1382797A2 und EP1126132A2 bekannt.

Aufgabe der Erfindung ist es, eine Strömungsmaschine mit reduzierten Strömungsverlusten im Ringraum und eine Schaufel für eine derartige Strömungsmaschine zu schaffen.

Diese Aufgabe wird gelöst durch eine Strömungsmaschine mit den Merkmalen des Patentanspruchs 1 und durch eine Schaufel mit den Merkmalen des Patentanspruchs 9.

Eine erfindungsgemäße Strömungsmaschine hat einen Stator, einen um eine Drehachse rotierbaren Rotor und einen Ringraum zum Führen eines Primärstroms. Der Ringraum wird durch eine statorseitige Seitenwandung und durch eine rotorseitige Seitenwandung begrenzt. In dem Ringraum ist zumindest ein Schaufelgitter mit einer Vielzahl von Schaufeln angeordnet. Erfindungsgemäß beginnt abweichend von einer idealaerodynamischen Ringraumkontur stromaufwärts von den Schaufeln eine radiale Ringraumerweiterung, die sich stromabwärts bis zu einem hinteren Bereich des Schaufelgitters erstreckt, der der idealaerodynamischen Ringraumkontur folgt.

Unter einer "idealaerodynamischen Ringraumkontur" wird bei den Temperaturen und der Drehzahl gemäß dem aerodynamischen Auslegungspunkt ein kavitätenfreier bzw. ein axialspaltfreier Ringraum verstanden, der einer Extrapolation bzw. im Wesentlichen einer Extrapolation der statorseitigen und rotorseitigen Seitenwandungen entspricht. Durch die kavitätenfreie Ausbildung setzt sich die idealaerodynamische Ringraumkontur im Wesentlichen ohne Sprung oder Knick zwischen zwei Schaufelgittern fort.

Durch die zumindest eine radiale Ringraumerweiterung wird ein Gitterkontrollvolumen am Eintritt des Schaufelgitters vergrößert und hierdurch eine Strömungsgeschwindigkeit am Eintritt und in Richtung des stromabwärtigen Bereich des Schaufelgitters abgesenkt. Damit sinkt auch ein mittleres Machzahlniveau im gesamten Gitterkontrollvolumen. Da Druckverluste in erster Näherung proportional zum Quadrat der Geschwindigkeit sind, nehmen diese ab. Ein potenzieller Verlust durch die Ringraumerweiterung wird dadurch überkompensiert. Zustätzlich wird bei kleineren Geschwindigkeiten eine Lärmentwicklung der Strömungsmaschine reduziert. Die radiale Ringraumerweiterung ist sowohl verdichterseitig, als auch turbinenseitig, insbesondere auch in der Hochdruckturbine (HDT), in einem umlenkenden Gitter hinter der HDT zum Turbine Mid Turbine Frame (TMTF), in einem nicht umlenkenden Gitter im sogenannten Turbine Center Frame (TCF), in der Niederdruckturbine (NDT) und im sogenannten Turbine Exit Casing (TEC), ausbildbar, so dass über den gesamten Primärstrom eine jeweils relevante Verzögerung reduziert werden kann.

Dabei wird der Effekt ausgenutzt, dass bei Schaufelgittern häufig eine Kavität vorhanden ist, an der immer wieder eine Grenzschicht neu startet. Dies wird genutzt, um eine effektive

Querschnittsfläche für den Ringraum zu erweitern und von einer ursprünglichen Ringraumform abzuweichen. Damit wird das lokale Geschwindigkeitsniveau am Eintritt und das mittlere Geschwindigkeitsniveau im Gitterkontrollvolumen abgesenkt, wodurch einhergehend aerothermodynamische Verluste reduziert werden.

Wenn die zumindest eine radiale Ringraumerweiterung turbinenseitig ausgebildet ist, ist es vorteilhaft, wenn sich die radiale Ringraumerweiterung bis zu einer Engstelle zwischen zwei benachbarten Schaufeln erstreckt. Die Engstelle ist dabei der Bereich mit dem kleinsten Abstand zwischen zwei benachbarten Schaufeln.

Wenn die zumindest eine radiale Ringraumerweiterung verdichterseitig ausgebildet ist, wird es bevorzugt, wenn die radiale Ringraumerweiterung in etwa 70%, d.h. zwischen 65% und 75%, der Gitterbreite umfasst. Der hintere, der idealaerodynamischen Ringraumkontur folgende Bereich des zumindest einen Schaufelgitters entspricht dabei der Differenz zur gesamten Gitterbreite, also hier etwa 30%.

Bei einem alternativen Ausführungsbeispiel ist die Ringraumerweiterung zweiseitig bzw. beidseits, also statorseitig und rotorseitig, ausgebildet. Es wird also eine statorseitige Ringraumerweiterung und eine rotorseitige Ringraumerweiterung gebildet bzw. die Ringraumerweiterung hat einen statorseitigen zurückgesetzten Abschnitt und einen rotorseitig zurückgesetzten Abschnitt. Durch diese Maßnahme lässt sich das Gitterkontrollvolumen im Vergleich zur einseitigen Ringraumerweiterung mindestens verdoppeln, gleichzeitig jedoch eine radial versetzte Anströmung des Schaufelgitters verhindern.

Bevorzugterweise zeigt ein Seitenwandungsabschnitt, der die zumindest eine radiale Ringraumerweiterung radial außen begrenzt, einen stufenlosen Verlauf. Der Seitenwandungsabschnitt kann dabei sowohl statorseitig, als auch rotorseitig ausgebildet sein.

Ein alternativer Seitenwandungsabschnitt zeigt einen stufenartigen Verlauf. Durch den stufenartigen Verlauf wird im Vergleich zum stufenlosen Verlauf die Ringraumerweiterung sprunghaft reduziert.

Die Schaufeln haben durch die Ringraumerweiterung eine um mindestens 2% verlängerte Vorderkante im Vergleich zu Schaufeln, die an gleicher Position der idealaerodynamischen Ringraumkontur folgen würden. Insbesondere wird es bevorzugt, wenn die Schaufeln eine um mindestens 5% verlängerte Vorderkante haben. Es hat sich jedoch auch eine um 14% verlängerte Vorderkante als vorteilhaft erwiesen. Der idealaerodynamische Ringraum schneidet die Vorderkanten durch ihre Verlängerung nicht in einem Bereich, in dem die Vorderkanten in die Seitenwandungen übergehen, sondern in einem Punkt, der von den Seitenwandungen radial beabstandet bzw. von den Seitenwandungen aus betrachtet radial weg von einer Ringraummitte versetzt ist.

Bevorzugterweise weisen zumindest zwei benachbarte Schaufelgitter die radiale Ringraumerweiterung auf. Hierdurch kommt es beim Übergang von einem Schaufelgitter zu einem benachbarten stromabwärtigen Schaufelgitter, welches die radiale Ringraumerweiterung aufweist, zu einem sogenannten "Rücksprung" im Ringraum gegenüber einem ideal aerodynamischen Ringraum.

Zusätzlich zur radialen Ringraumerweiterung können lokale Seitenwandkonturierungen wie Erhebungen und Vertiefungen vorgesehen sein. Bezogen werden die Seitenwandkonturierungen bevorzugterweise auf ein Nullniveau ohne Seitenwandkonturierung für den idealaerodynamischen Ringraum.

Eine erfindungsgemäße Schaufel hat zumindest eine Plattformkontur mit einem vorderen Bereich, der gegenüber einer idealaerodynamischen Ringraumkontur radial erweitert ist, und mit einem hinteren Bereich, der der idealaerodynamischen Ringraumkontur folgt und in den der vordere Bereich übergeht. Durch diese Maßnahme wird beginnend am stromaufwärtigen Bereich eines Leit- oder Laufgitters gegenüber einem idealaerodynamischen Ringraum der Ringraum aufgeweitet, wobei entweder die radial innere Seitenwandung nach radial innen abgesenkt und/oder die radial äußere Seitenwandung nach radial außen angehoben wird.

Sonstige vorteilhafte Ausführungsbeispiele der Erfindung sind Gegenstand weiterer Unteransprüche.

Im Folgenden werden bevorzugte Ausführungsbeispiele der Erfindung anhand von schematischen Darstellungen näher erläutert. Es zeigen:
- Figur 1: ein Ausführungsbeispiel eines Ringraums einer Strömungsmaschine im Bereich einer erfindungsgemäßen radialen Ringraumerweiterung, die stromaufwärts eines turbinenseitigen Laufschaufelgitters beginnt,
- Figur 2: eine Draufsicht auf einen abgewinkelten Umfangsabschnitt des turbinenseitigen Schaufelgitters aus Figur 1,
- Figur 3: ein Ausführungsbeispiel eines Ringraums einer Strömungsmaschine im Bereich einer erfindungsgemäßen radialen Ringraumerweiterung, die stromaufwärts eines verdichterseitigen Schaufelgitters beginnt, und
- Figur 4: eine Draufsicht auf einen abgewinkelten Umfangsabschnitt des verdichterseitigen Schaufelgitters aus Figur 3.

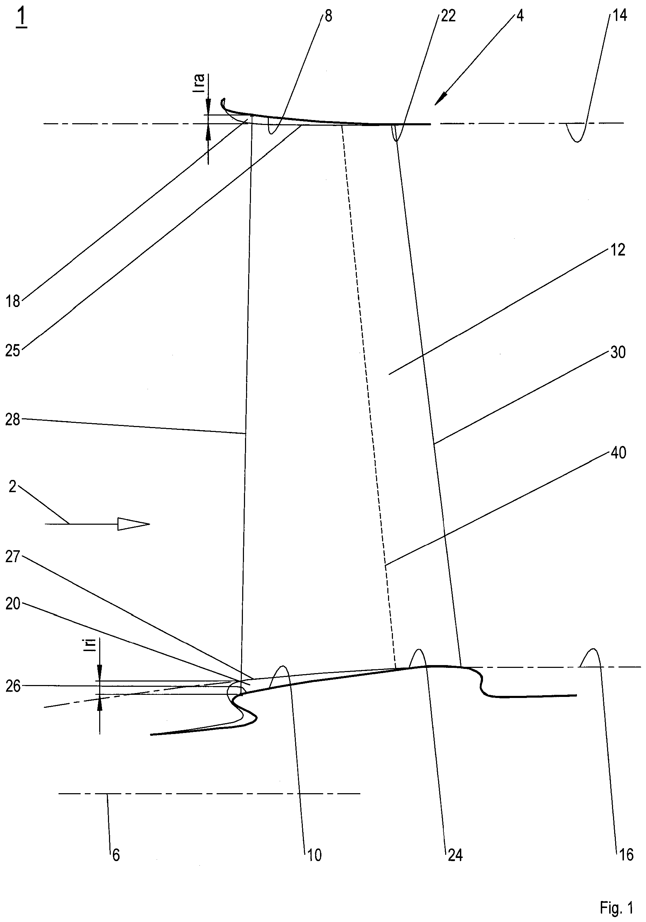

In Figur 1 ist eine Seitenansicht eines Ringraums 1 einer erfindungsgemäßen Strömungsmaschine zum Führen eines Primärstroms 2 im Bereich eines Schaufelgitters 4, hier ein Laufschaufelgitter, gezeigt. Der Primärstrom 2 durchströmt den Ringraum 1 gemäß der Pfeildarstellung von links nach rechts. Die Strömungsmaschine ist beispielsweise ein Flugtriebwerk und hat neben den Ringraum 1 einen nicht gezeigten Stator und einen nicht gezeigten Rotor, der um eine angedeutete Drehachse 6 rotierbar in dem Stator gelagert ist.

Der Ringraum 1 wird bezogen auf die Drehachse 6 des Rotors radial außen von einer statorseitigen Seitenwandung 8 und radial innen von einer rotorseitigen Seitenwandung 10 begrenzt. Das Schaufelgitter 4 ist drehfest mit dem Rotor verbunden und bildet mit seinem radial inneren Plattformring einen Teil der rotorseitigen Seitenwandung 10. Ein Teil der statorseitigen Seitenwandung 8 wird in diesem Ausführungsbeispiel von einem radial äußeren Plattformring des Schaufelgitters 4 gebildet, kann jedoch auch von statorseitigen Einlaufelementen für Schaufelspitzen des Schaufelgitters 4 gebildet sein.

Das Schaufelgitter 4 hat eine Vielzahl von Schaufeln 12, die in Umfangsrichtung nebeneinander angeordnet sind. Jede Schaufel 12 bildet dabei mit seiner eigenen radial inneren Plattform und hier auch mit seiner radial äußeren Plattform einen Abschnitt der Plattformringe.

Erfindungsgemäß beginnen abweichend von einer strichpunktiert dargestellten idealaerodynamischen Ringraumkontur 14, 16 stromaufwärts von den Schaufeln 4 zwei radiale Ringraumerweiterung 18, 20, die sich stromabwärts bis zu einem hinteren Bereich 22, 24 des Schaufelgitters 4 erstreckt, der der idealaerodynamischen Ringraumkontur 14, 16 folgen.

Unter einer idealaerodynamischen Ringraumkontur 14, 16 wird dabei ein kavitätenfreier bzw. ein axialspaltfreier Ringraum verstanden, der einer Extrapolation bzw. im Wesentlichen einer Extrapolation der statorseitigen und rotorseitigen Seitenwandungen 8, 10 entspricht. Durch kavitätenfreie Ausbildung setzt sich die idealaerodynamische Ringraumkontur 14, 16 im Wesentlichen ohne Sprung oder Knick zwischen benachbarten Schaufelgittern 4 fort.

Durch die radiale Ringraumerweiterungen 18, 20 werden ein Gitterkontrollvolumen am Eintritt des Schaufelgitters 4 vergrößert und hierdurch eine Strömungsgeschwindigkeit am Eintritt und in Richtung der stromabwärtigen Bereiche 22, 24 des Schaufelgitters 4 abgesenkt. Damit sinkt auch ein mittleres Machzahlniveau im gesamten Gitterkontrollvolumen. Da Druckverluste in erster Näherung proportional zum Quadrat der Geschwindigkeit sind, nehmen diese daher ab. Ein potenzieller Verlust durch die radiale Ringraumerweiterungen 18, 20 wird dadurch überkompensiert. Zustäzlich wird bei kleineren Geschwindigkeiten eine Lärmentwicklung der Strömungsmaschine reduziert.

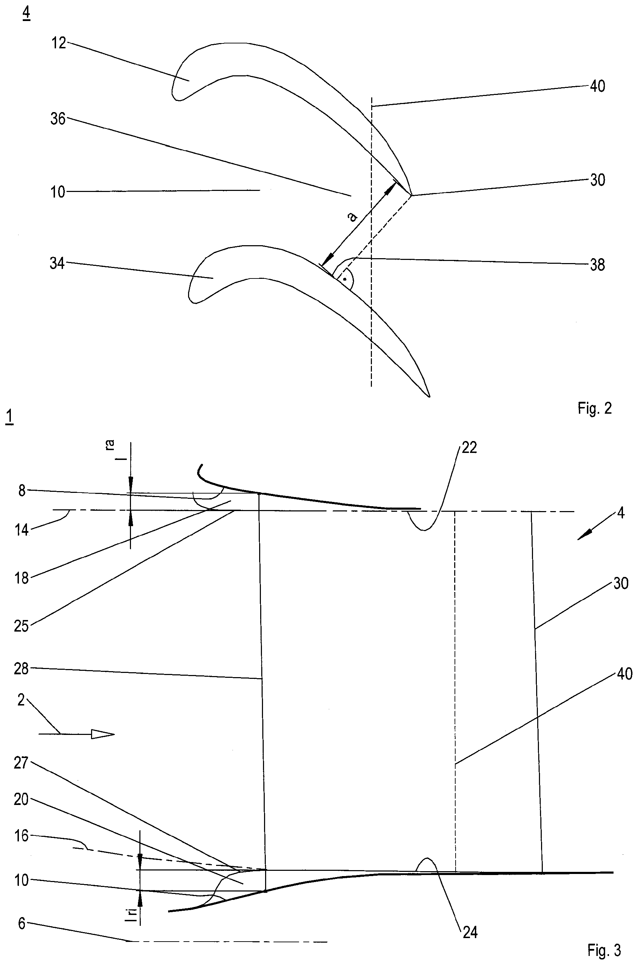

Die eine Ringraumerweiterung 18 ist statorseitig, und die andere Ringraumerweiterung 20 ist rotorseitig ausgebildet. Grundsätzlich lässt sich auch sagen, dass eine Ringraumerweiterung zweiseitig bzw. beidseits ausgebildet. Sie werden durch eine Zurücksetzung der statorseitigen Seitenwandung 8 und der rotorseitigen Seitenwandung 10 erreicht. Zur grafischen Verdeutlichung der Ringraumerweiterungen sind in Figur 2 Plattformringverläufe 25, 27 von einem herkömmlichen Schaufelgitter an gleicher Position eingezeichnet.

Die statorseitige Ringraumerweiterung 18 erfolgt bevorzugterweise derart, dass der radial äußere Plattformring des Schaufelgitters 4 eintrittsseitig radial nach außen versetzt ist und in Richtung des hinteren Bereichs 22 einen stufenlosen, radial nach innen gerichtet Verlauf zeigt bis der radial äußere Plattformring in seinen hinteren Bereich 22 ausläuft, der idealaerodynamischen Ringraumkontur 14 folgt.

Die rotorseitige Ringraumerweiterung 20 erfolgt bevorzugterweise eintrittsseitig des radial inneren Plattformrings des Schaufelgitters 4 stufenförmig, wobei der radial innere Plattformring stromabwärts einer Stufe 26 einen stufenlosen Verlauf zeigt, die radial innen zur idealaerodynamischen Ringraumkontur 16 liegt. Stromabwärts der Stufe 26 geht der radial innere Plattformring radial nach außen gerichtet in den hinteren Bereich 24 über, der der idealaerodynamiachen Ringraumkontur 16 folgt.

Als konstruktive Folge der zweiseitigen radialen Ringraumerweiterung 18, 20 werden Vorderkanten 28 der Schaufeln 12 radial gegenüber Vorderkanten im Vergleich zu Schaufeln, die an gleicher Position der idealaerodynamischen Ringraumkontur 14, 16 folgen würden, verlängert. Bevorzugterweise haben die Vorderkanten 28 der Schaufeln eine Gesamtverlängerung lri + lra um mindestens 2%, insbesondere um 5% erfahren. Hinterkanten 30 der Schaufeln 12 bleiben aufgrund der gegenüber der idealaerodynamischen Ringraumkontur 14, 16 folgendem hinteren Bereichen 22, 24 unverändert bzw. unverlängert gegenüber herkömmlichen Schaufeln an gleicher Position.

Wie anhand eines abgewickelten Umfangsabschnitts des Schaufelgitters 4 in Figur 2 mit Blick auf den inneren Plattformring 10 skizziert, erstrecken sich die turbinenseitigen radialen Ringraumerweiterungen 18, 20 bevorzugterweise bis zu einer Engstelle 36 zwischen zwei benachbarten Schaufeln 12, 34 des Schaufelgitters. Die Engstelle 36 befindet sich im kleinsten Abstand a zwischen den benachbarten Schaufeln 12, 34 und repräsentiert allgemein eine kleinste Querschnittsfläche eines Strömungskanals, der in Umfangsrichtung von zwei benachbarten Schaufeln 12, 34 begrenzt wird. Der kleinste Abstand a wird durch das Fällen des Lotes von einem Saugseitenabschnitt 38 der einen Laufschaufel 34 zur Hinterkante 30 der benachbarten Schaufel 12 bestimmt. Die Engstelle 36 ist beim turbinenseitigen Schaufelgitter 4 somit austrittseitig angeordnet. Dabei wird eine virtuelle Berührungslinie 40 als axiale Begrenzung für die Ringraumerweiterungen 18, 20 genommen. Die virtuelle Berührungslinie 40 ist mittig der Engstelle 36 zwischen den Schaufeln 12, 34 angeordnet und erstreckt sich in Umfangsrichtung. Sie ist insbesondere stromaufwärts der Hinterkanten 30 angeordnet und somit von diesen axial beabstandet (siehe auch Figur 1), so dass sich die Hinterkanten 30 in den Bereichen 22, 24 befinden, die der idealaerodynamischen Ringraumkontur 14, 16 folgen.

In Figur 3 ist ein Ringraum 1 einer Strömungsmaschine im Bereiche eines verdichterseitigen Schaufelgitters 4, insbesondere ein Leitschaufelgitter, mit einer statorseitigen Ringraumerweiterung 18 und mit einer rotorseitigen Ringraumerweiterung 20 gezeigt. Die Ringraumerweiterungen 18, 20 sind gegenüber einer idealaerodynamischen Ringraumkontur 14, 16 jeweils durch radiale Zurücksetzungen von Seitenwandungen 8, 10 des Ringraums 1 ausgeführt. Die Seitenwandungen 8, 10 werden im Bereich des Schaufelgitters 4 von einem radial äußeren Plattformring und von einem radial inneren Plattformring des Schaufelgitters 4 gebildet.

Die statorseitige Ringraumerweiterung 18 bzw. der radial äußere Plattformring ist ähnlich zum vorhergehenden Ausführungsbeispiel stufenlos ausgebildet. Die rotorseitige Ringraumerweiterung 20 ist im Unterschied zum vorhergehenden Ausführungsbeispiel ebenfalls stufenlos, so dass ein eintrittsseitig radial nach innen versetzter Plattformring des Schaufelgitters 4 stufenlos verläuft ist und ebenso stufenlos radial nach außen gerichtet in seinen hinteren Bereich 24 auf Höhe der idealaerodynamischen Ringraumkontur 14 übergeht.

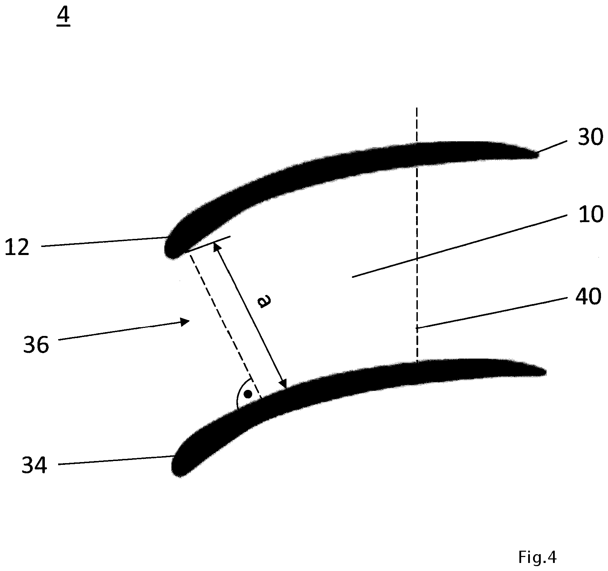

Wie in Figur 4 skizziert, erstrecken sich die verdichterseitigen radialen Ringraumerweiterungen 18, 20 im Unterschied zu den turbinenseitigen radialen Ringraumerweiterungen bevorzugterweise nicht nur bis zur Engstelle 36 zwischen zwei benachbarten Schaufeln 12, 34 des Schaufelgitters 4, sondern deutlich über diese hinaus, da die Engstelle 36 beim verdichterseitigen Schaufelgitter 4 eintrittsseitig angeordnet ist. Bevorzugterweise erstrecken sich die radialen Ringraumerweiterungen 18, 20 bei einem verdichterseitigen Schaufelgitter 4 bis zu einer Gitterbreite von etwa 70%, d.h. die hinteren, den idealaerodynamischen Ringraumkonturen 18, 20 folgenden Bereiche 22, 24 des zumindest einen Schaufelgitters 4 entsprechen der Differenz zur gesamten Gitterbreite, also in dem hier gezeigten Ausführungsbeispiel bevorzugterweise etwa 30%.

Selbstverständlich kann bei den in den Figuren 1 bis 4 erläuterten Ausführungsbeispielen jede Ringraumerweiterung 18, 20 für sich auch vor dem Schaufelgitter 4 und somit bereits im Bereich eines statorseitigen bzw. rotorseitigen Seitenwandungsabschnitts erfolgen, der stromaufwärts benachbart zum Schaufelgitter 4 angeordnet ist.

Offenbart ist eine Strömungsmaschine, mit einem Stator, mit einem um eine Drehachse rotierbaren Rotor, und mit einem Ringraum zum Führen eines Primärstroms, der eine statorseitige Seitenwand und eine rotorseitige Seitenwand hat und in dem zumindest ein Schaufelgitter mit einer Vielzahl von Schaufeln angeordnet ist, wobei abweichend von einer idealaerodynamischen Ringraumkontur stromaufwärts von den Schaufeln eine radiale Ringraumerweiterung beginnt, die sich stromabwärts bis zu einem hinteren Bereich des Schaufelgitters erstreckt, der der idealaerodynamischen Ringraumkontur folgt, sowie eine Schaufel für eine derartige Strömungsmaschine.

### Bezugszeichenliste

- 1: Ringraum
- 2: Primärstrom
- 4: Schaufelgitter
- 6: Drehachse
- 8: statorseitige Seitenwandung
- 10: rotorseitige Seitenwandung
- 12: Schaufel
- 14: idealaerodynamische Ringraumkontur
- 16: idealaerodynamische Ringraumkontur
- 18: Ringraumerweiterung
- 20: Ringraumerweiterung
- 22: hinterer Bereich
- 24: hinterer Bereich
- 25: herkömmlicher Seitenwandungsverlauf
- 26: Stufe
- 27: herkömmlicher Seitenwandungsverlauf
- 28: Vorderkante
- 30: Hinterkante
- 34: Schaufel
- 36: Engstelle
- 38: Saugseitenabschnitt
- 40: Berührungslinie

- a: Abstand
- lri: radial innere Verlängerung
- lra: radial äußere Verlängerung

## Patentansprüche

1. Strömungsmaschine, mit einem Stator, mit einem um eine Drehachse (6) rotierbaren Rotor, und mit einem Ringraum zum Führen eines Primärstroms (2), der eine statorseitige Seitenwandung (8) und eine rotorseitige Seitenwandung (10) hat und in dem zumindest ein Schaufelgitter (4) mit einer Vielzahl von Schaufeln (12) angeordnet ist, wobei abweichend von einer idealaerodynamischen Ringraumkontur (14, 16), die einem kavitätenfreien Ringraum bei einer Extrapolation der statorseitigen und rotorseitigen Seitenwandungen (8, 10) entspricht, stromaufwärts von den Schaufeln (12) eine radiale Ringraumerweiterung (18, 20) beginnt, die sich stromabwärts bis zu einem hinteren Bereich (22, 24) des Schaufelgitters (4) erstreckt und wobei die Schaufeln (12) durch die Ringraumerweiterung (18, 20) eine um mindestens 2% verlängerte Vorderkante (28) im Vergleich zu Schaufeln (12) haben, die an gleicher Position der idealaerodynamischen Ringraumkontur (14, 16) folgen würden, **dadurch gekennzeichnet, dass** der hintere Bereich (22, 24) des Schaufelgitters (4) der idealaerodynamischen Ringraumkontur (14, 16) folgt.

2. Strömungsmaschine nach Patentanspruch 1, bei der sich die Ringraumerweiterung (18, 20) bis zu einer Engstelle (36) zwischen zwei benachbarten Schaufeln (12) des Schaufelgitters (4) erstreckt.

3. Strömungsmaschine nach Patentanspruch 1, wobei die Ringraumerweiterung (18, 20) etwa 70% der Gitterbreite umfasst.

4. Strömungsmaschine nach Patentanspruch 1, 2 oder 3, wobei die Ringraumerweiterung (18, 20) zweiseitig ausgebildet ist.

5. Strömungsmaschine nach einem der vorhergehenden Patentansprüche, wobei ein die Ringraumerweiterung (18, 20) begrenzender Abschnitt der Seitenwandung (8) einen stufenlosen Verlauf zeigt.

6. Strömungsmaschine nach einem der Patentansprüche 1 bis 4, wobei ein die Ringraumerweiterung (18, 20) begrenzender Abschnitt der Seitenwandung (10) einen stufenartigen Verlauf zeigt.

7. Strömungsmaschine nach einem der vorhergehenden Patentansprüche, wobei zumindest zwei benachbarte Schaufelgitter (4) die Ringraumerweiterung (18, 20) aufweisen.

8. Strömungsmaschine nach einem der vorhergehenden Patentansprüche, wobei lokale Seitenwandkonturierungen ausgebildet sind.

9. Schaufel (12) für eine Strömungsmaschine nach einem der vorhergehenden Patentansprüche, wobei die Schaufel eine Plattform umfasst und die Plattform eine Plattformkontur mit einem vorderen Bereich und mit einem hinteren Bereich hat, wobei der vordere Bereich in den hinteren Bereich übergeht und der vordere Bereich gegenüber einer idealaerodynamischen Ringraumkontur radial erweitert ist, wobei die Schaufel (12) durch die Ringraumerweiterung (18, 20) eine um mindestens 2% verlängerte Vorderkante (28) im Vergleich zu Schaufeln (12) hat, die an gleicher Position der idealaerodynamischen Ringraumkontur (14, 16) folgen würden, **dadurch gekennzeichnet, dass** der hintere Bereich der idealaerodynamischen Ringraumkontur folgt.

## Claims

1. Turbomachine, comprising a stator, comprising a rotor which is rotatable about an axis of rotation (6), and comprising an annular space for guiding a primary flow (2), which space has a stator-side wall (8) and a rotor-side wall (10), and in which space at least one blade cascade (4) having a plurality of blades (12) is arranged, wherein, in deviation from an ideal aerodynamic annular space contour (14, 16) which corresponds to a cavity-free annular space in the case of extrapolation of the stator-side and rotor-side walls (8, 10), a radial annular space extension (18, 20) begins upstream of the blades (12), which extension extends downstream up to a rear region (22, 24) of the blade cascade (4), and wherein the blades (12), on account of the annular extension (18, 20), have a front edge (28) lengthened by at least 2% in comparison with blades (12) which would follow the ideal aerodynamic annular space contour (14, 16) at the same position, **characterized in that** the rear region (22, 24) of the blade cascade (4) follows the ideal aerodynamic annular space contour (14, 16).

2. Turbomachine according to claim 1, wherein the annular space extension (18, 20) extends up to a constriction point (36) between two adjacent blades (12) of the blade cascade (4).

3. Turbomachine according to claim 1, wherein the annular space extension (18, 20) comprises approximately 70% of the cascade width.

4. Turbomachine according to claim 1, 2 or 3, wherein the annular space extension (18, 20) is formed on two sides.

5. Turbomachine according to any of the preceding claims, wherein a portion of the side wall (8) delimiting the annular space extension (18, 20) has a stepless profile.

6. Turbomachine according to any of claims 1 to 4, wherein a portion of the side wall (10) delimiting the annular space extension (18, 20) has a stepped profile.

7. Turbomachine according to any of the preceding claims, wherein at least two adjacent blade cascades (4) have the annular space extension (18, 20).

8. Turbomachine according to any of the preceding claims, wherein local side wall contours are provided.

9. Blade (12) for a turbomachine according to any of the preceding claims, wherein the blade comprises a platform and the platform has a platform contour having a front region and a rear region, wherein the front region transitions into the rear region and the front region is radially expanded with respect to an ideal aerodynamic annular space contour, wherein the blade (12), on account of the annular extension (18, 20), has a front edge (28) lengthened by at least 2% in comparison with blades (12) which would follow the ideal aerodynamic annular space contour (14, 16) at the same position, **characterized in that** the rear region follows the ideal aerodynamic annular space contour.

## Revendications

1. Turbomachine, comportant un stator, un rotor pouvant tourner autour d'un axe de rotation (6) et un espace annulaire destinée à conduire un courant primaire (2), lequel espace présente une paroi latérale (8) côté stator et une paroi latérale (10) côté rotor et est disposé dans l'au moins une grille d'aubes (4) comportant une pluralité d'aubes (12), dans laquelle, en s'écartant d'un contour d'espace annulaire (14, 16) idéalement aérodynamique qui correspond à un espace annulaire exempt de cavités lors d'une extrapolation des parois latérales (8, 10) côtés stator et rotor, un élargissement d'espace annulaire (18, 20) radial commence en amont des aubes (12) et s'étend en aval jusqu'à une partie (22, 24) arrière de la grille d'aubes (4), et dans laquelle les aubes (12), du fait de l'élargissement d'espace annulaire (18, 20), présentent un bord d'attaque (28) allongé d'au moins 2 % par rapport aux aubes (12) qui devraient suivre le contour d'espace annulaire (14, 16) idéalement aérodynamique dans la même position, **caractérisée en ce que** la partie (22, 24) arrière de la grille d'aubes (4) suit le contour d'espace annulaire (14, 16) idéalement aérodynamique.

2. Turbomachine selon la revendication 1, dans laquelle l'élargissement d'espace annulaire (18, 20) s'étend jusqu'à un point de rétrécissement (36) entre deux aubes (12) adjacentes de la grille d'aubes (4).

3. Turbomachine selon la revendication 1, dans laquelle l'élargissement d'espace annulaire (18, 20) comprend environ 70 % de la largeur de la grille.

4. Turbomachine selon la revendication 1, 2 ou 3, dans laquelle l'élargissement d'espace annulaire (18, 20) est réalisé de deux côtés.

5. Turbomachine selon l'une des revendications précédentes, dans laquelle une section de la paroi latérale (8), laquelle section limite l'élargissement d'espace annulaire (18, 20), présente un tracé continu.

6. Turbomachine selon l'une des revendications 1 à 4, dans laquelle une section de la paroi latérale (10), laquelle section limite l'élargissement d'espace annulaire (18, 20), présente un tracé par paliers.

7. Turbomachine selon l'une des revendications précédentes, dans laquelle au moins deux grilles d'aubes (4) adjacentes présentent l'élargissement d'espace annulaire (18, 20).

8. Turbomachine selon l'une des revendications précédentes, dans laquelle des contours locaux de paroi latérale sont réalisés.

9. Aube (12) pour une turbomachine selon l'une des revendications précédentes, dans laquelle l'aube comprend une plate-forme et la plate-forme présente un contour de plate-forme comportant une partie avant et une partie arrière, dans laquelle la partie avant se prolonge dans la partie arrière et la partie avant est élargie radialement par rapport à un contour d'espace annulaire idéalement aérodynamique, dans laquelle l'aube (12), du fait de l'élargissement d'espace annulaire (18, 20), présente un bord d'attaque (28) allongé d'au moins 2 % par rapport aux aubes (12) qui devraient suivre le contour d'espace annulaire (14, 16) idéalement aérodynamique dans la même position, **caractérisée en ce que** la partie arrière suit le contour d'espace annulaire idéalement aérodynamique.
